# EUROPÄISCHE PATENTANMELDUNG

(11) **EP 4 145 441 A1**
(43) Veröffentlichungstag der Anmeldung: **08.03.2023**
(21) Anmeldenummer: 22196501.5
(22) Anmeldetag: 13.12.2013
(51) Int. Cl.: G10K 11/16, B29C 44/18, B60R 13/08

(54) **DÄMMELEMENT, EXPANDIERTES DÄMMELEMENT, VERWENDUNG EINES SOLCHEN UND VERFAHREN ZUR DÄMMUNG**

(30) Priorität: 21.12.2012 EP 12198960
(62) Teilanmeldung aus: 13803057.2
(71) Anmelder: Sika Technology AG, 6340 Baar (CH)
(72) Erfinder: BELPAIRE, Vincent, 1180 Uccle (BE); LECROART, Guillaume, 7830 Silly (BE); BRICHET, Nicolas, 8055 Zürich (CH); GILOT, Lionel, 5190 Jemeppe-sur Sambre (BE)
(74) Vertreter: Sika Patent Attorneys

(57) **Zusammenfassung**

Die Erfindung betrifft ein Dämmelement (30), insbesondere zur akustischen Dämmung einer Öffnung und/oder eines Hohlraums in einem Fahrzeug oder Gebäude, mit einem Trägerelement (31) und einem expandierbaren Material. Das Trägerelement (31) weist mehrere Durchdringungen (36) auf, wobei nur eine Oberfläche des Trägerelements (31) zumindest teilweise mit expandierbaren Material (33) bedeckt ist, und das expandierbare Material (33) die Durchdringungen (36) zumindest teilweise ausfüllt.

Sie betrifft des Weiteren hieraus hergestelltes Dämmelement, die Verwendung eines solchen sowie Verfahren zur akustischen Dämmung und/oder Verstärkung einer Öffnung oder eines Hohlraumes eines Land-, Luft- oder Wasserfahrzeuges oder eines Gebäudes.

## Beschreibung

### Technisches Gebiet

Die Erfindung betrifft ein Dämmelement, insbesondere zur akustischen Dämmung einer Durchdringung und/oder eines Hohlraums in einem Fahrzeug oder Gebäude, mit einem Trägerelement und einem expandierbaren Material. Sie betrifft des Weiteren ein expandiertes Dämmelement, die Verwendung eines solchen sowie Verfahren zur Dämmung.

### Stand der Technik

Vielfach weisen Bauelemente, wie Karosserien und/oder Rahmen von Transport- und Fortbewegungsmitteln, insbesondere von Fahrzeugen zu Wasser oder zu Land oder von Luftfahrzeugen, Hohlräume auf, insbesondere um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken. Auch für Dämmzwecke im Bauwesen werden expandierbare oder im Prozess des Einbringens bzw. Auftragens expandierende Materialien zu mannigfachen Zwecken eingesetzt, speziell zum Abdichten und zur akustischen Dämmung von Öffnungen oder Hohlräumen im Bereich der Hausinstallation oder der Gebäudehaut.

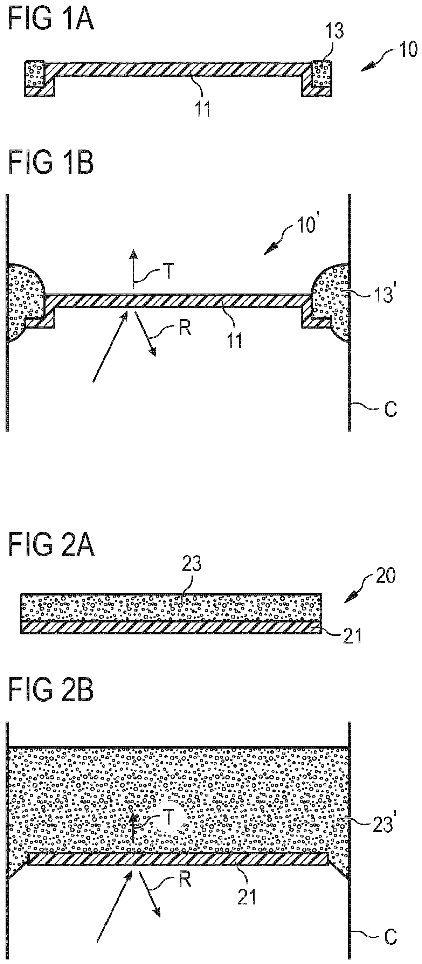

Fig. 1A und 1B sowie 2A und 2B zeigen schematisch zwei bekannte Konzepte zum abdichtenden und dämmenden Verschluss von Öffnungen bzw. Hohlräumen in einem Kraftfahrzeug.

Fig. 1A zeigt ein Dämmelement 10 im Querschnitt, welches ein Trägerelement 11 und in dessen abgekantetem Randbereich ein expandierbares Material 13 umfasst. Fig. 1B zeigt ein aus diesem Dämmelement gebildetes expandiertes Dämmelement 10' eingesetzt in einen Hohlraum C. Durch Expandieren des expandierbaren Material zu einem expandierten Material 13' sind am Rand des Trägerelementes 11 Dicht- und Dämmbereiche gebildet, die zugleich eine Fixierung des Dämmelementes 10' im Hohlraum C bewirken.

Fig. 2A und 2B zeigen in ähnlicher Darstellungsweise ein Dämmelement 20 mit einem (hier vollständig ebenen) Trägerelement 21 und einem die eine der beiden Oberflächen des Trägerelementes 21 bedeckenden expandierbaren Material 23 bzw. ein hieraus gebildetes Dämmelement 20', eingesetzt wiederum in einen Hohlraum C. Hier sind die Randbereiche als auch eine gesamte Oberfläche des Trägerelementes 21 mit dem aus dem expandierbaren Material gebildeten expandierten Material (Schaum) 23' bedeckt, so dass eine Dämmwirkung über den gesamten Querschnitt des Hohlraums erzielt wird. In den Figuren 1B und 2B ist durch die mit R bzw. T bezeichneten Pfeile die Reflexion bzw. Transmission von Schallwellen schematisch gekennzeichnet.

Aus der WO 2010/060381 ist ein Dämmelement bekannt, welches im Wesentlichen flächige Gestalt hat und mit einer regulären Anordnung von Durchgangslöchern und auf beiden Oberflächen mit einem expandierbaren Material beschichtet ist. Nach Expandieren dieses Materials sind beide Oberflächen dieses Dämmelementes (mit Ausnahme des Zentralbereiches der Öffnungen) vollflächig mit dem Dämmstoff bedeckt. Seine Herstellung ist jedoch vergleichsweise komplex und kostenaufwändig und die Dämmung nicht ideal.

Aus der EP 1 362 683 ist ein Dämmelement bekannt, bei dem ein im Ausgangszustand expandierbares und im Endzustand expandiertes Material zwischen zwei zueinander parallelen und beabstandeten Trägerplatten mit einer Zellstruktur angeordnet ist. Ein durch Expandieren des expandierbaren Materials aus diesem Dämmelement hergestelltes Dämmelement zeichnet sich dadurch aus, dass die äusseren Oberflächen der Tragstruktur vollständig mit dem expandierbaren Material (Schaum) bedeckt sind, welches durch Öffnungen der zellularen Struktur hindurch gedrungen ist.

Die Druckschrift EP 2 147 848 A1 beschreibt ein Verstärkungselement, das unter anderem zur Schalldämmung dienen soll. Optional kann das Verstärkungselement der EP 2 147 848 A1 einen Träger mit einem Durchbruch umfassen. In einer Ausführungsform der DE 2 147 848 A1 wird ein "akustischer Schaum" vorgeschlagen. Bei dieser Ausführungsform ist (im "gebackenen Zustand") eine Oberfläche eines Trägers mit dem Schaumstoff überdeckt, wobei eine gegenüberliegende Oberfläche frei bleibt.

Die WO 2011/146793 A1 beschreibt ein sog. "aktivierbares Material", das beispielsweise zur Schallreduktion zum Einsatz kommen soll und in einen oder mehreren Durchbrüchen angeordnet sein soll. In einer Ausführungsform der WO 2011/146793 A1 wird das "aktivierbare Material" vor einer Aktivierung durch einen Durchbruch hindurchgedrückt, so dass das "aktivierbare Material" vor der Aktivierung auf beiden Seiten eines Trägers angeordnet ist. Insgesamt wird dieser Stand der Technik als vergleichsweise aufwendig empfunden.

### Darstellung der Erfindung

Der Erfindung liegt die Aufgabe zugrunde, ein verbessertes Dämmelement bzw. expandiertes Dämmelement der oben erläuterten Art bereit zu stellen. Des Weiteren soll ein verbessertes Verfahren zur akustischen Dämmung einer Durchdringung und/oder eines Hohlraums bereitgestellt werden.

Diese Aufgabe wird in ihrem Vorrichtungsaspekt durch ein Dämmelement mit den Merkmalen des Anspruchs 1 und in ihrem Verfahrensaspekt durch ein Verfahren mit den Merkmalen des Verfahrens-Anspruchs gelöst. Zweckmässige Fortbildungen des Erfindungsgedankens sind Gegenstand der anhängigen Ansprüche.

Insbesondere wird die Aufgabe durch ein (expandierbares) Dämmelement, vorzugsweise zur akustischen Dämmung einer Öffnung und/oder eines Hohlraums in einem Fahrzeug oder Gebäude, mit einem Trägerelement und einem expandierbaren Material gelöst, wobei das Trägerelement mehrere Durchdringungen aufweist, wobei (im nicht-expandierten Zustand) nur eine Oberfläche des Trägerelements zumindest teilweise mit expandierbarem Material bedeckt ist, und das expandierbare Material die Durchdringungen zumindest teilweise ausfüllt. Vorzugsweise ist das expandierbare Material im expandierten Zustand auf Umfangsbereiche in der Oberfläche des Trägerelements, die der Oberfläche des Trägerelements, welche zumindest teilweise (im nicht-expandierten Zustand) mit expandierbarem Material bedeckt ist, gegenüberliegt, expandiert.

Ein Kerngedanke der vorliegenden Erfindung liegt darin, dass das expandierbare Material vor der Expansion nur eine (bzw. genau eine; Englisch: one) Oberfläche des Trägerelementes bedeckt, jedoch (zumindest teilweise) in die Durchdringungen eingebracht ist. Nach der Expansion bedeckt das expandierbare Material auch Abschnitte der anderen Oberfläche, auf der das expandierbare Material vor der Expansion nicht angeordnet war. Insbesondere die ursprüngliche Anordnung des expandierbaren Materials ist dadurch vergleichsweise einfach. Eine zuverlässige Fixierung des expandierbaren Materials wird auf synergistische Weise dadurch erreicht, dass dieses expandiert wird. Gleichzeitig wird ein Dämmelement mit einem hohen Schallabsorptionsgrad realisiert. Unter der "Oberfläche" des Trägerelements, die (im nicht-expandierten Zustand) bereits mit expandierbarem Material bedeckt ist, ist eine Oberfläche des Trägerelements zu verstehen, die sich bis zu einem Kantenbereich des Trägerelements erstreckt. Die Oberfläche des Trägerelements, die (nur im expandierten Zustand) mit expandierbarem Material bedeckt ist, liegt der Oberfläche des Trägerelements, die im nicht-expandierten Zustand mit expandierbarem Material bedeckt ist, gegenüber (und erstreckt sich ebenfalls bis zu einem Kantenbereich).

In einer vorteilhaften Ausgestaltung des vorgeschlagenen (expandierbaren) Dämmelements erstreckt sich das expandierbare Material (im nicht-expandierten Zustand) in die Durchdringungen, insbesondere (im Wesentlichen) bis zur freien Oberfläche des flächigen Abschnitts (und nicht darüber hinaus). Dies ermöglicht die Bildung eines Dämmelementes, bei der das expandierbare Material zu einer geschlossenen Beschichtung genau einer Oberfläche des flächigen Abschnitts des Trägerelementes sowie auf Umfangsbereiche der der geschlossenen Beschichtung gegenüberliegenden Oberfläche expandiert ist.

Speziell ist die Beschichtung des Trägerelementes mit dem expandierbaren Material in der Vorprodukt-Stufe (im nicht-expandierten Zutsand) so ausgestaltet, dass beim Endprodukt (im expandierten Zustand) die der geschlossenen Beschichtung gegenüberliegende freie Oberfläche des flächigen Abschnitts des Trägerelementes zu mehr als 50%, insbesondere bis zu 75%, mit dem expandierten Material bedeckt ist. Die freie Oberfläche ist zu 50% bis 95% bedeckt, bevorzugt zu 50% bis 90% und besonders bevorzugt zu 60 bis 75% bedeckt.

Grundsätzlich können die mit expandiertem Material bedeckten Umfangsbereiche der nicht ursprünglich mit expandierbarem Material bedeckten Oberfläche miteinander durch Materialbrücken verbunden sein bzw. teilweise ineinander übergehen. Wesentlich ist, dass auf dieser Oberfläche eine ausgeprägte Vertiefungs-Struktur vorliegt, die mehrere Wölbungen aufweist, die die Reflexion von dort auftreffenden Schallwellen infolge von Auslöschungseffekten wesentlich herabsetzt.

Das Dämmelement weist ein ausgezeichnetes Leistungs-/Gewichts- und Leistungs-/Kosten-Verhältnis in Bezug auf seine akustischen Dämmeigenschaften auf.

In einer weiteren Ausgestaltung der Erfindung besteht das Trägerelement aus einem Kunststoff, insbesondere aus einem Polyurethan, Polyamid, Poly(phenylenether), Polysulfon oder Polyethersulfon. Alternativ kann das Trägerelement aus einem gewachsenen organischen Material bestehen, insbesondere aus einem Holz- oder anderen Faserwerkstoff.

Vorzugsweise ist das Trägerelement plattenförmig (also als Trägerplatte ausgebildet). In dieser Ausführungsform bildet eine erste Seite der Platte diejenige Oberfläche, die bereits im nicht-expandierten Zustand des Materials bedeckt ist und eine weitere (gegenüberliegende, in die entgegengesetzte Richtung weisende) Seite diejenige Oberfläche, die (nur) im expandierten Zustand des expandierbaren Materials mit diesem bedeckt ist. Zwischen den beiden Seiten befindet sich ein Plattenrand bzw. eine Plattenkante.

In einer bevorzugten Ausgestaltung wird ein expandiertes Dämmelement vorgeschlagen, wobei das expandierbare Material auf Umfangsbereiche der der Oberfläche des Trägerelementes, welches zumindest teilweise mit expandierbarem Material bedeckt ist, gegenüberliegenden Oberfläche des Trägerelements expandiert ist.

Gemäß einer Weiterbildung wird ein (expandierbares bzw. expandiertes) Dämmelement vorgeschlagen, wobei (im expandierten Zustand) eine Oberfläche des Trägerelementes mit einer geschlossenen Schicht und dessen andere, gegenüberliegende Oberfläche zumindest teilweise in umfangsnahen Bereichen der Durchdringungen mit expandiertem Material bedeckt ist.

Gemäß einer bevorzugten Ausführungsform wird ein (expandiertes bzw. expandierbares) Dämmelement vorgeschlagen, wobei (im expandierten Zustand) die freie Oberfläche zu 50 % bis 95 %, bevorzugt zu 50 % bis 90 % und besonders bevorzugt zu 60 % bis 75 % mit expandiertem Material bedeckt ist.

Vorzugsweise sind (im expandierten Zustand) auf der vollständig bedeckten Oberfläche des Trägerelements oberhalb der Durchdringungen Vertiefungen ausgebildet.

In weiteren Ausgestaltungen der Erfindung ist vorgesehen, dass das expandierbare Material ein chemisches Treibmittel, beispielsweise Azodicarbonamid, Sulfohydrazid, Hydrogencarbonat oder dergleichen, oder ein physikalisches Treibmittel aufweist. In leicht mit kommerziell verfügbaren Ausgangsstoffen realisierbaren Ausführungen ist vorgesehen, dass das expandierbare Material eine einkomponentige Epoxidharz- oder Polyurethan- oder EVA- Zusammensetzung aufweist.

Vorgeschlagen wird des Weiteren die Verwendung des oben spezifizierten erfindungsgemässen Dämmelementes zur akustischen Dämmung und/oder Verstärkung einer Öffnung und/oder eines Hohlraums eines Land-, Luft- oder Wasserfahrzeuges, insbesondere einer Aussenhülle desselben oder zur akustischen und/oder thermischen Dämmung von Bereichen, insbesondere einer Öffnung und/oder eines Hohlraumes, eines Gebäudes.

Gemäß einem weiteren Aspekt der vorliegenden Erfindung wird ein Verfahren zur akustischen Dämmung und/oder Verstärkung einer Öffnung oder eines Hohlraums vorgeschlagen, wobei ein Dämmelement der oben beschriebenen Art in die Öffnung oder den Hohlraum eingebracht und anschließend das expandierbare Material expandiert wird.

### Kurze Beschreibung der Zeichnung

Vorteile und Zweckmässigkeiten der Erfindung ergeben sich im Übrigen aus der nachfolgenden Beschreibung von Ausführungsbeispielen und -aspekten, teilweise anhand der Figuren. Von diesen zeigen:
- Fig. 1A und 1B: schematische Darstellungen zur Erläuterung eines ersten akustischen Dämmungskonzeptes,
- Fig. 2A und 2B: schematische Darstellungen zur Erläuterung eines zweiten akustischen Dämmungskonzeptes,
- Fig. 3A und 3B: schematische Darstellung einer Ausführungsform des erfindungsgemässen Dämmelementes bzw. expandierten Dämmelementes (3B),
- Fig. 4A, 4B: eine perspektivische Darstellung einer weiteren Ausführung des erfindungsgemässen Dämmelementes,
- Fig. 4C: eine perspektivische Darstellung des Dämmelementes nach 4A und 4B in einer Einbausituation,
- Fig. 5: perspektivische Darstellungen zur Erläuterung eines weiteren Ausführungsbeispiels der Erfindung.

Es sind nur die für das unmittelbare Verständnis der Erfindung wesentlichen Elemente gezeigt. Gleichartige oder gleichwirkende Elemente sind mit dem gleichen Bezugszeichen versehen.

### Weg zur Ausführung der Erfindung

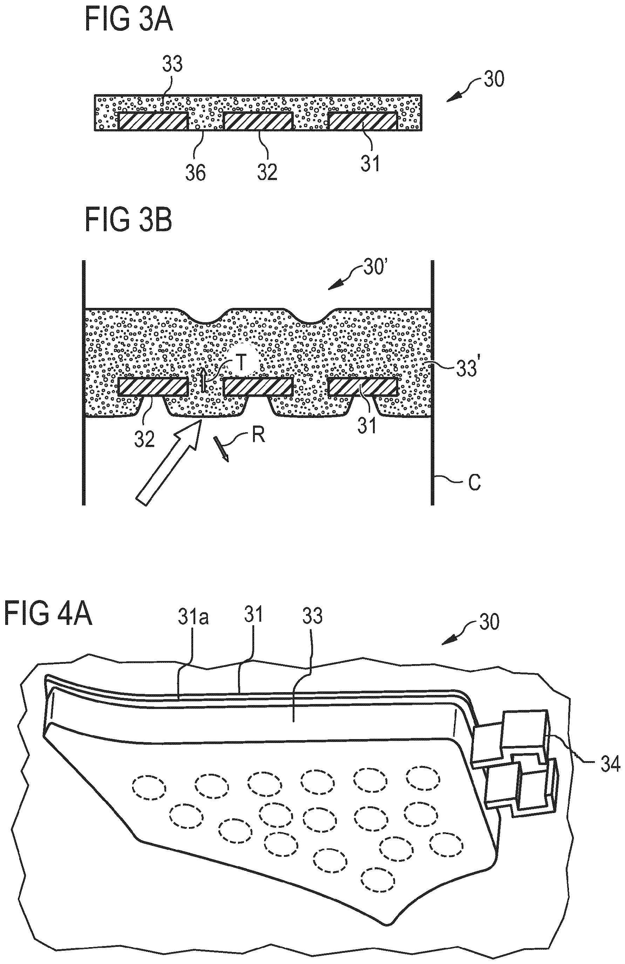

Fig. 3A und 3B zeigen im Querschnitt ein erfindungsgemässes Dämmelement 30 (Fig. 3A) bzw. expandiertes Dämmelement 30' (Fig. 3B), letzteres eingesetzt in einem akustisch zu dämmenden Hohlraum C, beispielsweise in einem Strukturelement eines Fahrzeuges. Das Dämmelement 30 umfasst ein plattenartiges Kunststoff-Trägerelement 31 mit einer Mehrzahl von Durchdringungen, Durchgangslöchern 36 und ein auf einer Oberfläche des Trägerelementes angeordnetes expandierbares Material 33, welches besonders bevorzugt auch die Durchdringungen 36 bis zur unteren, im Ausgangszustand freien Oberfläche 32 des Trägerelementes durchdringt. Dabei muss das expandierbare Material 33 die Durchdringungen nicht bis zur freien Oberfläche 32 durchdringen, respektive kann auch ein wenig über die freie Oberfläche 32 vorstehen. Besonders bevorzugt ist jedoch, dass das expandierbare Material 33 die Durchdringungen 36 bis zur Oberfläche durchdringt. Der flächige Anteil der Durchdringungen 36 beträgt bevorzugt ca. 20 bis 70% der Gesamtfläche des Trägerelementes, besonders bevorzugt ca. 30 bis 60%, weiter bevorzugt ca. 30 bis 50%, insbesondere 30 bis 40% der Gesamtfläche des Trägerelementes. Die Durchdringungen haben bevorzugt eine rundliche oder elliptische Form, können aber auch eckig oder in einer andern Form ausgestaltet werden.

Fig. 3B zeigt das in den Hohlraum C eingeschäumte Dämmelement 30' und verdeutlicht, dass das expandierte expandierbare Material 33' die eine Oberfläche des Trägerelementes 31 mit einer geschlossenen Schicht und dessen andere freie Oberfläche 32 teilweise, und zwar jeweils in umfangsnahen Bereichen der Durchdringungen 36, bedeckt. Die freie Oberfläche 32 ist zu 50% bis 95% bedeckt, bevorzugt zu 50% bis 90% und besonders bevorzugt zu 60 bis 75% bedeckt. Infolge der Expansion des expandierbaren Materials durch die Durchdringungen 36 hindurch haben sich auf der vollständig bedeckten Oberfläche des Trägerelementes 31 oberhalb der Durchdringungen jeweils kleine Vertiefungen gebildet, so dass beide Oberflächen des Dämmelementes eine Vertiefungs-Struktur aufweisen.

Infolge dieser Vertiefungs-Struktur und des Fehlens ebener Oberflächen ergibt sich sowohl ein verringertes Reflexions- als auch Transmissionsvermögen für Schallwellen, was durch die in Fig. 3B eingetragenen und mit R (für Reflexion) bzw. T (für Transmission) bezeichneten Pfeile verdeutlicht ist.

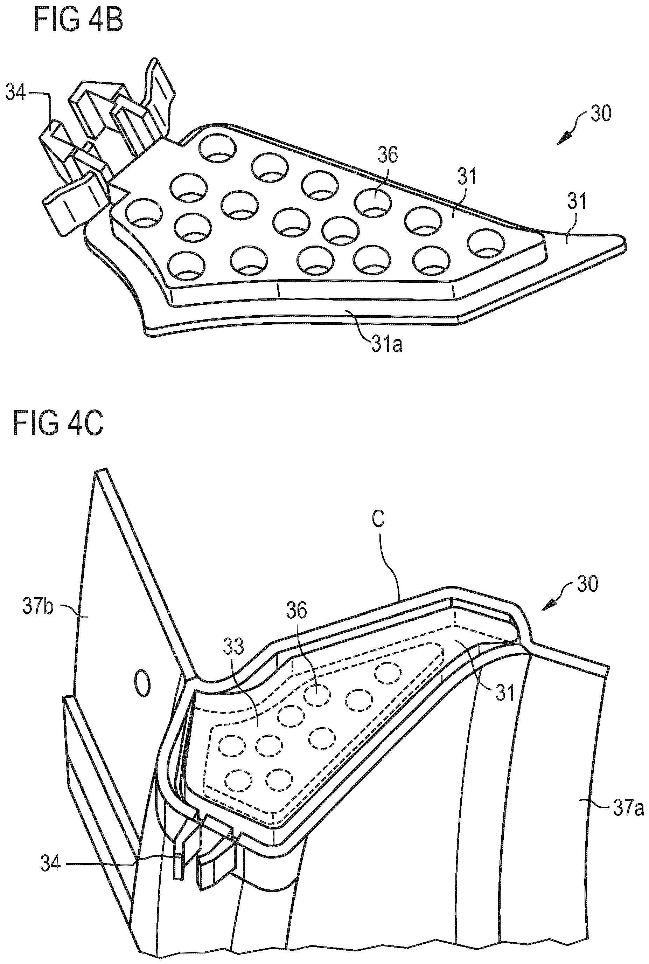

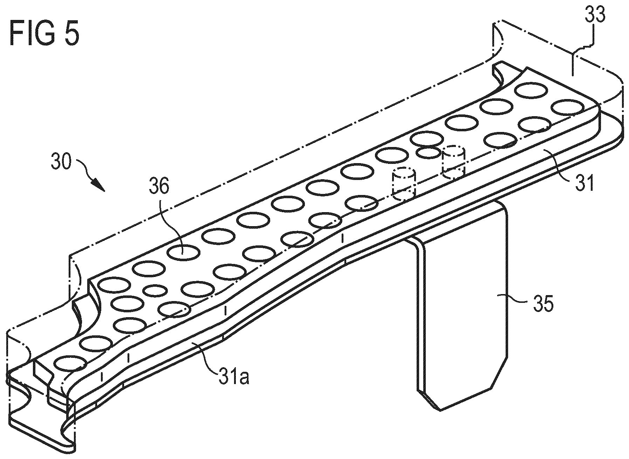

Fig. 4A zeigt eine spezielle geometrische Konfiguration eines gemäss Fig. 3A aufgebauten Dämmelementes in perspektivischer Darstellung, Fig. 4B zeigt ein baugleichähnliches Trägerelement zum Dämmelement welches in Fig. 4A dargestellt ist. Das Trägerelement verfügt über ein Befestigungselement 34, beispielsweise ein Clip, über den das Dämmelement in einem Hohlraum befestigt werden kann. Das Trägerelement 31 weist zudem einen Randbereich 31a auf. Dieser umschliesst im Wesentlichen das Trägerelement und ist im Vergleich zum Bereich des Trägerelementes der mit Durchdringungen 36 versehen ist im Querschnitt dünner ausgestaltet, Fig. 4B und 5.

Fig. 4C zeigt ein zu Fig. 4A baugleichähnliches Dämmelement 30, das ein mit Durchdringungen 36 versehenes Trägerelement 31 und eine hierauf aufgebrachte Schicht 33 eines schäumbaren Materials aufweist, in einer Einbausituation in einem von Begrenzungselementen 37a, 37b, beispielsweise Blechen, begrenzten Hohlraum C, beispielsweise einer Kraftfahrzeug-Struktur. Durch Aufschäumen des schäumbaren Materials 33 wird ein in den Hohlraum fest eingeschäumtes und diesen akustisch und ggf. auch thermisch dämmendes und weitgehend den Eintritt von Feuchtigkeit verhinderndes Dämmelement gebildet.

Fig. 5 zeigt als weiteres Ausführungsbeispiel ein Dämmelement 30 mit einem Trägerelement 31, beispielsweise aus Polyamid, das eine Vielzahl kreisförmiger Durchdringungen 36 aufweist, und einem hierauf aufgetragenen expandierbarem Material 33. Die Stärke des Trägermaterials kann ebenso wie die des aufgebrachten expandierbaren Materials ca. 4 mm betragen. Das Dämmelement 30 ist hier mit einem Befestigungselement 35 versehen, welches hier als Metallelement, beispielsweise aus Blech, ausgeformt ist und mit der Hohlraumstruktur beispielsweise durch Schweissen verbunden werden kann.

Die Vielzahl von kreisförmigen Durchdringungen, Löchern 36 im Trägerelement, welches in diesem Beispiel aus 4,5 mm dickem PA 6.6, besteht und der Anteil der Durchdringungen beträgt ca. 30 bis 40% der Gesamtfläche des Trägerelementes. Als aufschäumbares Material wird beispielsweise ein elastisch aufschäumendes Polyurethan mit einer Schichtdicke von 4 mm aufgebracht, welches nach dem Aufschäumen des expandierbaren Materials vorzugsweise eine Dicke zwischen 30 und 40 mm annehmen kann.

Es versteht sich, dass sich das erfindungsgemässe Konzept in vielgestaltigen anderen Konfiguration, und u. a. mit mehrteiligen und räumlich komplex geformten Trägerelementen, realisieren lässt.

### Expandierbare (schäumbare) Materialien

Als schäumbares Material kann grundsätzlich jedes beliebige Material eingesetzt werden, das kontrolliert zur Schäumung gebracht werden kann. Dieses Material kann dabei Verstärkungseigenschaften aufweisen oder auch nicht. Typischerweise wird das schäumbare Material thermisch, durch Feuchtigkeit oder durch elektromagnetische Strahlung geschäumt.

Ein solches schäumbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage Schaumstrukturen in Polymeren zu erzeugen.

Bevorzugt wird das schäumbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.

Geeignete Treibmittel sind beispielsweise auch kommerziell erhältlich unter dem Handelsnamen Expancel^{®} von der Firma Akzo Nobel, Niederlande, oder unter dem Handelsnamen Celogen^{®} von der Firma Chemtura Corp., USA. Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 160 °C, insbesondere von 80 °C bis 150 °C, bevorzugt von 90 °C bis 140 °C, schäumbar.

Als schäumbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete schäumbare Materialien sind Treibmittel enthaltende einkomponentige Poly¬urethan¬zusammensetzungen, aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschreiben sind in EP 0 204 970.

Weiterhin eignen sich als schäumbare Materialien Treibmittel enthaltende zweikomponentige Epoxid/Poly¬urethan-Zusam¬men¬set¬zungen, wie sie beispielsweise beschrieben sind in WO 2005/080524 A1, dessen Offenbarung hiermit eingeschlossen ist.

Weiterhin eignen sich als schäumbare Materialien Treibmittel enthaltende Ethylen-Vinyl-Acetat-Zusam¬men¬set¬zungen.

Ebenfalls geeignete schäumbare Materialien werden beispielsweise unter dem Handels¬namen SikaBaffle^{®} 240, SikaBaffle^{®} 250 oder SikaBaffle^{®} 255 von der Sika Corp., USA, vertrieben und sind in den Patenten US 5,266,133 und US 5,373,027 beschrieben, deren Offenbarung hiermit eingeschlossen ist. Solche schäumbaren Materialien sind für die vorliegende Erfindung besonders bevorzugt.

Als schäumbare Materialien mit Verstärkungseigenschaften sind beispielsweise diejenigen bevorzugt, welche unter dem Handelsnamen SikaReinforcer^{®} 941 von der Sika Corp., USA, vertrieben werden. Diese sind beschrieben in US 6,387,470, dessen Offenbarung hiermit eingeschlossen ist.

### Trägermaterial

Das Trägerelement kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder gewachsene organische Materialien, insbesondere Holz- oder andere (gepresste) Faserwerkstoffe oder glasartige oder keramische Materialien; speziell auch geschäumte Materialien dieser Art; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet.

Weiterhin kann das Trägerelement einen beliebigen Aufbau und eine beliebige Struktur aufweisen. Es kann beispielsweise massiv, hohl, oder geschäumt sein oder eine gitterartige Struktur aufweisen. Die Oberfläche des Trägerelements kann typischerweise glatt, rau oder strukturiert sein.

Bei erfindungsgemässen Abdichtungs- und Verstärkungselementen, bei welchen sich das schäumbare Material auf einem Trägerelement befindet, unterscheidet sich das Herstellungsverfahren dementsprechend, ob das Trägerelement aus einem durch Spritzguss verarbeitbaren Material besteht oder nicht. Ist dies der Fall, wird üblicherweise ein Zweikomponenten-Spritzgussverfahren eingesetzt. Dabei wird zuerst eine erste Komponente, in diesem Fall das Trägerelement, gespritzt. Nach Erstarren dieser ersten Komponente wird die Kavität im Werkzeug vergrössert, bzw. angepasst, oder der hergestellte Spritzling wird in ein neues Werkzeug gelegt, und eine zweite Komponente, in diesem Fall das schäumbare Material, wird mit einem zweiten Spritzaggregat an die erste Komponente angespritzt.

Besteht das Trägerelement aus einem Material, welches sich nicht durch das Spritzgussverfahren herstellen lässt, also beispielsweise aus einem Metall, wird das Trägerelement in ein entsprechendes Werkzeug gelegt und das schäumbare Material wird an das Trägerelement angespritzt. Selbstverständlich besteht auch die Möglichkeit das schäumbare Material durch spezielle Befestigungsmittel oder-verfahren an dem Trägerelement zu befestigen.

Selbstverständlich ist die Erfindung nicht auf das gezeigte und beschriebene Ausführungsbeispiel beschränkt. Die Befestigungslemente können beliebig ausgestaltete werden und es können diese auch in den Figuren ausgetauscht werden.

### Bezugszeichenliste

- 10; 20; 30: Dämmelement
- 10';20';30': Expandiertes Dämmelement
- 11; 21; 31: Trägerelement
- 31a: Trägerelement Randbereich
- 32: Freie Oberfläche von 31
- 13;23;33: Expandierbares Material
- 13';23';33': Expandiertes Material
- 34, 35: Befestigungselement
- 36: Durchdringung
- 37a, 37b: Begrenzung Hohlraum
- C: Hohlraum
- R: Reflektierte Schallwellen
- T: Transmittierte Schallwellen

## Patentansprüche

1. Dämmelement (30), insbesondere zur akustischen Dämmung einer Öffnung und/oder eines Hohlraums in einem Fahrzeug oder Gebäude, mit einem Trägerelement (31) und einem expandierbaren Material (33), **dadurch gekennzeichnet, dass** das Trägerelement (31) mehrere Durchdringungen (36) aufweist, wobei nur eine Oberfläche des Trägerelements (31) zumindest teilweise mit expandierbaren Material (33) bedeckt ist, und das expandierbare Material (33) die Durchdringungen (36) zumindest teilweise ausfüllt.

2. Dämmelement nach Anspruch 1, **dadurch gekennzeichnet, dass** das expandierbare Material (33) sich in den Durchdringungen (36) im Wesentlichen bis zur freien Oberfläche des Trägerelements (31) erstreckt.

3. Dämmelement nach Anspruch 1 oder 2, **dadurch gekennzeichnet, dass** der flächige Anteil der Durchdringungen (36) 20 bis 70% der Gesamtfläche des Trägerelementes beträgt, bevorzugt 30 bis 60%, weiter bevorzugt 30 bis 50%, insbesondere 30 bis 40% der Gesamtfläche des Trägerelements (31).

4. Dämmelement nach einem der vorhergehenden Ansprüche, **dadurch gekennzeichnet, dass** die Durchdringungen (36) eine rundliche oder elliptische Form, insbesondere eine runde Form, aufweisen.

5. Dämmelement nach einem der vorhergehenden Ansprüche, **dadurch gekennzeichnet, dass** das Trägerlement (31) einen Randbereich (31a) mit verjüngtem Querschnitt aufweist.

6. Dämmelement nach einem der vorhergehenden Ansprüche, **dadurch gekennzeichnet, dass** das Trägerelement plattenförmig ist.

7. Expandiertes Dämmelement (30') nach einem der vorhergehenden Ansprüche, **dadurch gekennzeichnet, dass** das expandierbare Material (33) auf Umfangsbereiche der der Oberfläche des Trägerelements (31), welche zumindest teilweise mit expandierbaren Material (33) bedeckt ist, gegenüberliegenden Oberfläche (32) des Trägerelementes (31) expandiert ist.

8. Expandiertes Dämmelement nach Anspruch 7, **dadurch gekennzeichnet, dass** eine Oberfläche des Trägerelementes (31) mit einer geschlossenen Schicht und dessen andere gegenüberliegende Oberfläche (32) zumindest teilweise in umfangsnahen Bereichen der Durchdringungen (36) mit expandiertem Material (33') bedeckt ist.

9. Expandiertes Dämmelement nach einem der Ansprüche 7 oder 8, **dadurch gekennzeichnet, dass** die freie Oberfläche (32) zu 50% bis 95%, bevorzugt zu 50% bis 90% und besonders bevorzugt zu 60 bis 75% mit expandiertem Material (33') bedeckt ist.

10. Expandiertes Dämmelement nach einem der Ansprüche 7 bis 9, **dadurch gekennzeichnet, dass** auf der vollständig bedeckten Oberfläche des Trägerelementes (31) oberhalb der Durchdringungen (36) Vertiefungen ausgebildet sind.

11. Verwendung eines Dämmelementes (30) nach einem der Ansprüche 1 bis 6 zur akustischen Dämmung und/oder Verstärkung einer Öffnung und/oder eines Hohlraums eines Land-, Luft- oder Wasserfahrzeuges, und/oder eines Hohlraumes, eines Gebäudes.

12. Verfahren zur akustischen Dämmung und/oder Verstärkung einer Öffnung oder eines Hohlraumes, **dadurch gekennzeichnet, dass** ein Dämmelement (30) nach einem der Ansprüche 1 bis 6 in die Öffnung oder den Hohlraum eingebracht und anschliessend das expandierbare Material (33) expandiert wird.
